# EUROPEAN PATENT SPECIFICATION

(11) **EP 0 723 715 B1**
(45) Date of publication and mention of the grant of the patent: **26.08.1998**
(21) Application number: 94903982.0
(22) Date of filing: 13.10.1993
(51) Int. Cl.: H01S 3/06

(54) **A DIODE PUMPED, CW OPERATING, SINGLE-MODE OPTICAL FIBER LASER EMITTING AT 976 NM**
EIN DIODENGEPUMPTER,KONTINUIERLICH ARBEITENDER OPTISCHER EINZELMODEN-FASERLASER, der bei 976 nm emittiert
LASER MONOMODE A FIBRES OPTIQUES POMPE PAR DIODE A EMISSION CONTINUE SUR 976 NM

(43) Date of publication of application: 31.07.1996
(73) Proprietor: ITALTEL SOCIETA ITALIANA TELECOMUNICAZIONI s.p.a., 20149 Milano (IT); IRE-POLUS CO., Fryazino, Moscow, 141120 (RU)
(72) Inventor: GAPONTSEV, Valentin P., 57299 Burbach (DE); SAMARTSEV, Igor, Apartment 404 Fryazino Moscow, 141120 (RU)
(74) Representative: Giustini, Delio
(86) International application number: IT9300108
(87) International publication number: WO9510869

(56) References cited:
- EP-A- 0 239 772
- EP-A- 0 320 990
- WO-A-91/10272
- US-A- 4 829 529
- PROCEEDINGS OF THE OSA TOPICAL MEETING,MAY 1-3,1989 pages 340 - 345 D.C.HANNA ET AL. 'Continuous wave tunable and superffluorescent operation of a monomode Ytterbium-doped fiber laser' cited in the application
- PROCEEDINGS OF THE IEEE NEREM,NOVEMBER 6-8 1968,MASSACHUSETTS,USA pages 42 - 43 E.SNITZER 'Recent advances in glass lasers' cited in the application

## Description

### Technical Field

The present invention relates to a single-mode optical fiber laser device and more particularly to a new source of a laser radiation in the wavelength range of 976 nm, generally defined as 970-980 nm, which is particularly useful in telecommunication systems.

The invention aims to provide a laser source capable of emitting in continuous wave regime in the range of 976 nm with an appreciable output power, in the order of 100 mW and that can directly be spliced to an optical amplifier, such as an erbium fiber amplifier.

The single-mode optical fiber laser according to the invention is particularly applicable for supplying a pump radiation to an erbium fiber amplifier without appreciable losses.

### Background Art

In the paper "Continuous-Wave Tunable and Superfluorescent Operation of a Monomode Ytterbium-Doped Fiber-Laser" by D.C. Hanna et al., Proceedings of the OSA Topical Meeting, May 1-3, 1989 it is disclosed the possibility of achieving single-mode emission at 976 nm by an Ytterbium doped optical fiber pumped by a separate dye laser in the wavelength region between 800 and 920 nm.

Such pumping scheme produces high laser thresholds because of the quite high Yb concentration required for producing an absorption of the pump radiation which is sufficient to obtain a high output power.

A high laser threshold means that a relatively high minimum optical power is required for starting the lasing of the device, which is a considerable disadvantage in many telecommunication applications, in particular in remotedly fed systems.

In a paper by E. Snitzer, "Recent Advances in glass Laser", NEREM RECORD, 1968, it has been reported the operation of a laser based on a glass doped with Nd and Yb. The mechanism involved in the operation of such device is non-radiative energy transfer between Nd an Yb which occurs at the high concentration levels reported in the article.

Substantially Nd is pumped by the incoming radiation and Nd in turn releases energy to Yb so that a high concentration of Yb is requested also in this case when a high output power is desired. Moreover the device allows only for pulsed operation (non continuous wave) and for emission at a wavelength around 1060 nm.

As a further example of Nd-doped fiber laser, from US-A-4 829 529 it is known a single-mode fiber laser emitting at a wavelength of 1,080 nm and comprising an Nd doped glass single-mode fiber surrounded by a multi-mode fiber surface and an outer clad layer, two mirrors at the fiber ends to form a resonant cavity, and a coherent 800 nm high power laser diode source coupled to one end of the fiber through a focusing optics device. This device too emits a radiation at the wavelength in the range of 1,060-1,080 nm.

Moreover none of the above considered prior art is concerned with the problem of connecting the fiber laser to a fiber element, such as an erbium amplifier.

### Objects of the Invention

The object of the present invention is that of providing a laser device capable of eliminating the above mentioned limitations of the known art, and more particularly:
- providing an Nd-Yb doped glass laser device capable of operating in continuous wave regime in the 970-980 nm range;
- improving the connectability of the laser source to an erbium amplifier;
- allowing the use of an inexpensive pumping device.

### Summary of the Invention

The above objects are accomplished by the invention which consists of a single-mode optical fiber laser comprising
- a pumping laser diode source emitting light at a first wavelength;
- an optical fiber segment coupled at one end to said laser diode source and comprising:
   i. an inner step-index single-mode waveguide;
   ii. an outer multi-mode waveguide surrounding the former;
   iii. a cladding surrounding said outer waveguide,
characterized in that
- a pair of mirrors placed at the ends of said optical fiber segment,
- said inner waveguide is doped with both Nd and a concentration of Yb low enough to ensure intracavity radiative transfer from Nd to Yb;
- said mirrors are reflecting Nd laser radiation at a second wavelength in the range 910-940 nm and Yb laser radiation at a third wavelength in the range 970-980, and suppressing reflections of wavelengths outside the range defined by said second and third wavelengths;
- said first wavelength being in the range 780-820 nm.

According to the invention, the achievement of the desired purposes are due to a combination of features and more precisely: the simultaneous doping with Nd and Yb of the active fiber, the use of low Yb concentrations and the special design of the end mirrors.

In order to obtain a high output power, the invention does not rely upon the conventional techniques of increasing either the dopant(s) concentration or the pumping power, or both, but rather the invention takes advantages of the intra-cavity pumping associated with radiative energy transfer between the dopants, and by forcing the system to laser at a wavelength that is different from the spontaneous one.

Contrarily to the current technical opinion that reducing the dopant(s) concentration (for reducing the laser threshold) below a predetermined amount no lasing effect is obtained, the Applicant has surprisingly discovered that, performing a drastic reduction of the Yb concentration's below the above mentioned amount (i.e. a concentration of Yb 100 - 1000 times lower than the concentration of Yb of the known devices) again laser action is obtained.

Furthermore, considering that the low concentration of Yb leads to a decrease of the total conversion efficiency with tandem pumping due to low absorption, in the application - in order to increase absorption/conversion efficiency, an in fiber intracavity pumping has been developed by simultaneously doping a single-mode fiber with Nd and very low concentrations of Yb and by forcing the Nd to laser at a wavelength which is very near the one the Yb ions are capable of absorbing.

In other words thanks:
- to the high power inside the cavity (intracavity pumping); and
- to the special design of the mirrors able to force the Nd to emit Nd at a wavelength which is very near to the one Yb ions are capable of absorbing,
is possible to increase the absorption and consequently the conversion efficiency.

The general operation of the device according to the invention is deemed to be as follows.

Nd is pumped by a diode laser emitting at about 800 nm. Laser emission from Nd takes place at 920 nm due to suitable design of the mirrors for quenching its natural emission at 1.06 µm. In turn the high power density present inside the cavity pumps the Yb ions very efficiently, thus providing gain for CW (Continuous Wave) low-threshold single-mode emission at 976 nm. The energy transfer between Nd and Yb occurs through photon absorption and not through atomic collisions as in the known device.

The laser device according to the invention is able to produce a very stable and efficient emission in the spectral range of 976 ± 1 nm and can be spliced directly with an erbium fiber amplifier without appreciable losses.

A further advantage of the laser device according to the invention resides in that the pumping device is an inexpensive multi-mode 800 nm GaAlAs laser diode which is easily available and reliable. Through a scaling up of the output power to the range 250-500 mW an output power level in the range 100-200 mW at 976 nm is easily achieved.

Due to the large emitting surface (50-100 µm²) of such diodes the output power density does not exceed 3-5 mW/µm² which is ten times less than in the case of single-mode 980 nm.

An additional advantage of the fiber laser device of the invention is that the arrangement for stabilizing the diode emission wavelength is quite simple. Thanks to the wide pumping band of the Nd ions in the quartz glass, the use of diodes emitting in the 780-820 nm, i.e. within ± 20 nm is acceptable.

Additional characteristics and advantages of the invention will be better understood from the description of preferred but not exclusive embodiments of the device illustrated - only as non limiting examples - in the attached drawings, in which:

### Brief Description of Drawings

Fig. 1 schematically shows an embodiment of a laser device according to the invention with a longitudinal cross section of the optical waveguide segment thereof;
Fig. 2 illustrates the profile of the index of refraction in the fiber of the laser device;
Fig. 3 shows a cross section of optical waveguide segment according to an embodiment of the present invention;
Fig. 4 shows a cross section of optical waveguide segment according to another embodiment of the present invention; and
Fig. 5 schematically illustrated an alternative embodiment for coupling the pumping diode to the optical waveguide segment.

### Description of Preferred Embodiments

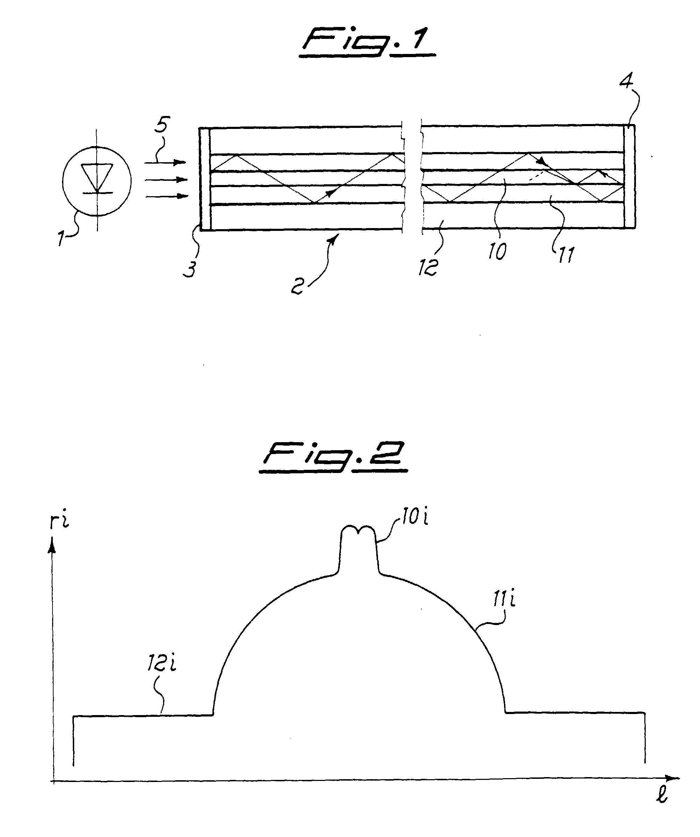

With reference to Fig. 1 the laser device of the invention consists of a pumping laser diode 1 and a length or segment 2 of an optical waveguide comprising an inner waveguide 10 and an outer waveguide 11 surrounding the former, as well as a cladding layer 12 surrounding the waveguide 11. The length of the optical waveguide is preferably in the order of about one meter.

Preferably such optical waveguide is realized as a double-core fiber 2 with an inner core 10, an outer core 11 and an annular cladding 12 all having a generally circular cross section.

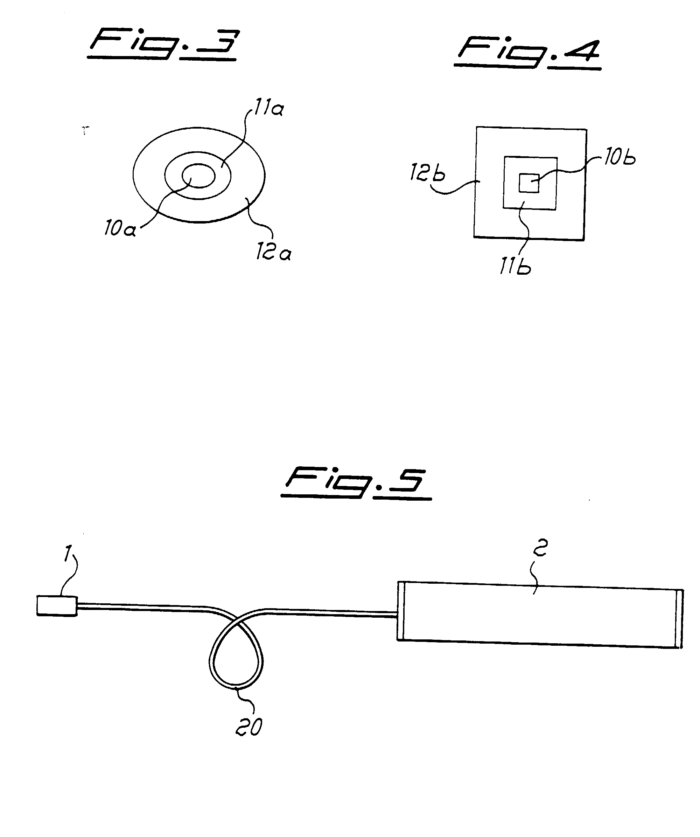

However the present invention is not limited to this shape and an elliptical construction is shown in Fig. 3 as comprising an inner waveguide 10a, an outer multi-mode waveguide 11a surrounding the former, and a quartz cladding 12a, all with a generally elliptical cross section.

Fig. 4 illustrates an embodiment with a rectangular construction comprising an inner waveguide 10b, an outer multi-mode waveguide 11b surrounding the former, and a quartz cladding 12b, all with a generally rectangular or square cross section.

In the following the invention will be further illustrated with reference to a circular cross section structure, but the disclosure applies also to the other possible embodiments unless otherwise specified.

The preferred profile of the refractive index ri of waveguide 2 (10i-12i) is illustrated by Fig. 2, with the inner core 10 of the fiber 2 being a step index single-mode core that is co-doped by Nd and Yb in a ratio from 20 to 100, and preferably from 30 to 50. The amounts of the dopants will be discussed later on.

The inner waveguide 10 is of quartz glass doped with Al, P, Sc, Y or a combination thereof.

The surrounding outer waveguide 11 is a graded index multi-mode core with an outer diameter ranging from 30 to 100 µm, depending on the face size of the diode 1.

More generally the index of refraction of the outer core 11 is lower than that of the inner core 10. Such fiber can be manufactured through a conventional MCVD process.

The cladding 12 is preferably of quartz glass doped with fluorine. As an alternative, the cladding 12 is a polymeric composition. The index of refraction 12i is generally constant as shown by Fig. 2.

Each end of the fiber is coated by a multilayer dielectric mirror, respectively 3 and 4. Both mirrors are highly reflective (> 90%) to a radiation in the range 910-940 nm and to a radiation in the range 970-980 nm. Further the mirrors should practically have a suppressed reflection of the wavelengths outside the range 910-980 nm, and particularly the range 1000-1100 nm, i.e. the range of natural emission of Nd.

This means that the mirrors reflect (or trap) the wavelength in the pumping range and let pass through the wavelengths above 980 nm, and particularly that in the range 1060-1100 nm. Most preferably, at 976 nm only mirror 3 facing the pumping diode 1 is highly reflective (> 99%), whereas the output mirror 4 is less reflective (about 90%). The mirrors can be formed by direct sputtering using a known RF magnetron technique.

A laser diode source 1 emitting a pump light at a wavelength of 780 to 820 nm is optically coupled to one end face of the fiber. In accordance with a preferred embodiment of the invention, the source 1 is an 800 nm multi-mode diode the active surface of which is optically coupled to one end face of the fiber, in case through a cylindrical lens (not shown). The laser diode 1 is for example a GaAlAs multi-mode SQW diode realized through an MOCVD technique. Such source can be replaced by an array of diodes.

The light beam 5 generated by the laser source 1, launched into the outer core 12 at one of the fiber end, propagates therethrough and eventually but not necessarily can be reflected back at the other fiber end by the mirror 4 which can be made highly reflective at the pumping wavelength.

Through multiple reflections at the interface outer core/cladding the light penetrates into the inner core 11 (as shown by Fig. 1) and is absorbed by Nd³⁺ ions which in turn are lasing in the range of 925-930 nm via the resonance transition 4_{F3/2} --> 4_{I9/2}. This emission in turn acts as a pumping radiation for the Yb³⁺ ions of the same inner core 10 that is lasing on a wavelength of 976 nm that corresponds to the resonance transition 2_{F5/2} --> 2_{F7/2}.

The line emitted by Yb ions does not depend on the device temperature and in the quartz glass the halfwidth is of about 3 nm only. Using this device for pumping Er doped fiber optic amplifiers, since the lasing wavelength is automatically localized near the maximum of the band, there is no problem with the shift of the pumping line outside of the erbium absorption band because of the dispersion due either to the manufacturing process or to the temperature influence.

Since a 940 nm water absorption band overlaps the pumping radiation of Yb ions (930 nm), it is preferable to control the water content of the fiber.

According to actually preferred embodiments of the invention, the optical waveguide 2 has the characteristics set forth as hereinafter specified:

| | Useful range | Preferred range |
|---|---|---|
| Nd concentration | 10 - 500 | 80 - 110 ppm |
| Yb concentration | 1 - 50 | 1 - 4 ppm |
| diameter of the doped core | 1 - 7 | 2 - 5 µm |
| diameter of the pumping core | 15 - 100 | 15 - 30 µm |
| numerical aperture of the pumping core | 0.12 - 0.40 | 0.12 - 0.20 |
| numerical aperture of the doped core | 0.08 - 0.25 | 0.10 - 0.25 |

According to the presently preferred embodiment of the invention, schematically shown in Fig. 5 in which the same references have been used for equal or similar components, the coupling between the pumping diode 1 and the optical waveguide segment 2 is realized through a multi-mode fiber pigtail 20 directly spliced to the waveguide segment at one end and coupled to the diode 1 at the other end through conventional and not illustrated means.

For graphic requirements, the size of the optical waveguide segment 2 was magnificated as his real size is approximately the same of the fiber pigtail 20.

As another advantage of the invention the requirements for the stability of the diode emission wavelength are greatly simplified. Due to the wide pumping band of Nd ions in the quartz glass it is acceptable to use diodes with a wavelength from 790 nm to 820 nm, i.e. within a band of ± 15 nm.

In particular thanks to the specific rare earth dopants Nd and Yb it is possible to use an inexpensive multi-mode 800 nm GaAlAs laser diode which is easily available and reliable.

Furthermore, thanks to the special design of the mirrors it is possible to obtain a laser device capable to operate in 970-980 nm range.

In addition, thanks to the very low concentration of Yb (100-1000 lower than the concentration of the known devices) it is possible to obtain a laser operating according to a radiative energy transfer between Nd and Yb and consequently a single-mode optical fiber laser continuous wave operation.

## Claims

1. A single-mode optical fiber laser comprising:
- a pumping laser diode source (1) emitting light at a first wavelength;
- an optical fiber segment (2) coupled at one end to said laser diode source (1) and comprising:
i. an inner step-index single-mode waveguide (10);
ii. an outer multi-mode waveguide (11) surrounding the former;
iii. a cladding (12) surrounding said outer waveguide (11),
- a pair of mirrors (3, 4) placed at the ends of said optical fiber segment (2),
characterized in that:
- said inner waveguide (10) is doped with both Nd and a concentration of Yb low enough to ensure intracavity radiative transfer from Nd to Yb;
- said mirrors (3, 4) are reflecting Nd laser radiation at a second wavelength in the range 910-940 nm and Yb laser radiation at third wavelength in the range 970-980, and suppressing reflections of wavelengths outside the range defined by said second and third wavelengths.
- said first wavelength being in the range 780-820 nm.

2. A laser device as claimed in claim 1, characterized in that the Nd concentration in said inner waveguide (10) is from 10 to 500 ppm and the Yb concentration is from 1 to 50 ppm.

3. A laser device as claimed in claim 1 or 2, characterized in that the Nd and Yb concentrations in said inner waveguide (10) are of 80-110 ppm and of 1-4 ppm, respectively.

4. A laser device as claimed in claims 1 to 3, characterized in that said optical waveguide segment (2) is coupled to said laser diode source (1) through a direct splicing of a multi-mode fiber pigtail (20) to said optical waveguide segment (2).

5. A laser device as claimed in claims 1 to 4, characterized in that the Nd to Yb ratio in said step index single-mode waveguide (10) is comprised between 20 to 100, and preferably between 30 to 50.

6. A laser device as claimed in claims 1 to 4, characterized in that the ratio of the cross-section areas between the inner waveguide (10) and the outer waveguide (11) is comprised between 1 and 100, and preferably between 2 and 20.

7. A laser device as claimed in claims 1 to 4, characterized in that the numerical aperture of the outer waveguide (11) is comprised between 0.12 and 0.35 and the numerical aperture of the inner waveguide (10) is comprised between 0.08 and 0.25.

8. A laser device as claimed in any of the preceding claims, characterized in that the inner waveguide (10) is of quartz glass doped with Al, P, Sc, Y or a combination thereof.

9. A laser device as claimed in any of the preceding claims, characterized in that said cladding (12) is of quartz glass.

10. A laser device as claimed in claim 9, characterized in that said quartz glass is doped with fluorine.

11. A laser device as claimed in any of the preceding claims, characterized in that said mirrors (3, 4) are formed as coatings of a multilayer dielectric.

12. A laser device as claimed in any of the preceding claims, characterized in that said outer waveguide (11) has a graded profile of the refraction index.

13. A laser device as claimed in any of the preceding claims, characterized in that said diode source (1) is a multi-mode 800 nm GaAlAs laser diode.

14. A laser device as claimed in claim 1, characterized in that the reflectivity of said mirrors (3, 4) is > 90%.

15. A laser device as claimed in claim 1 and 14, characterized in that the reflectivity of the mirror (3) facing the pumping diode (1) is > 99%.

## Patentansprüche

1. Optischer Einzelmoden-Faserlaser der sich wie folgt zusammensetzt:
- eine Pumpquelle mit Laserdiode (1) die Licht mit einer ersten Wellenlänge ausstrahlt;
- ein optisches Fasersegment (2), das an einem Ende mit der genannten Laserdiodenquelle (1) verbunden ist, und das folgende Elemente umfaßt:
i. einen inneren Einzelmoden-Wellenleiter (10) mit Schritt indikation;
ii. einen äußeren Mehrmoden-Wellenleiter (11), der den vorstehend genannten umgibt;
iii. eine Plattierung (12), die den genannten äußeren Wellenleiter umgibt,
- ein Spiegelpaar (3, 4), das an den Enden des genannten optischen Fasersegments (2) angebracht ist,
dadurch gekennzeichnet, daß
- der genannte innere Wellenleiter (10) sowohl mit Nd als auch einer Konzentration von Yb, die niedrig genug ist, um einen Radiationstransfer zwischen den Hohlräumen von Nd nach Yb zu gewährleisten;
- die genannten Spiegel (3, 4) eine Nd-Laserstrahlung mit einer zweiten Wellenlänge in der Größenordnung von 910-940 nm und einer Yb-Laserstrahlung mit einer dritten Wellenlänge in der Größenordnung von 970-980 reflektieren, und Strahlungen mit Wellenlängen außerhalb der durch die zweite und dritte Wellenlänge definierten Größenordnung verdrängen,
- wobei die genannte erste Wellenlänge sich in der Größenordnung von 780-820 nm bewegt.

2. Laservorrichtung entsprechend Anspruch 1, dadurch gekennzeichnet, daß die Nd-Konzentration im genannten inneren Wellenleiter (10) von 10 bis 500ppm und die Yb-Konzentration von 1 bis 50 ppm beträgt.

3. Laservorrichtung nach Anspruch 1 oder 2, dadurch gekennzeichnet, daß die Nd- und Yb-Konzentrationen im genannten inneren Wellenleiter (10) von 80-110 ppm beziehungsweise von 1-4 ppm betragen.

4. Laservorrichtung entsprechend den Ansprüchen von 1 bis 3, dadurch gekennzeichnet, daß das genannte optische Wellenleitersegment (2) durch ein direktes Spleißen einer Mehrmoden-Faseranschlußlitze (20) mit dem genannten optischen Wellenleitersegment (2) gekoppelt ist.

5. Laservorrichtung entsprechend den Ansprüchen von 1 bis 4, dadurch gekennzeichnet, daß das Verhältnis zwischen der Konzentration von Nd und Yb in dem genannten Einmoden-Wellenleiter (10) mit Schrittindikation zwischen 20 bis 100 und vorzugsweise zwischen 30 bis 50 enthalten ist.

6. Laservorrichtung entsprechend den Ansprüchen von 1 bis 4, dadurch gekennzeichnet, daß das Verhältnis der Querschnittsbereiche zwischen dem inneren Wellenleiter (10) und dem äußeren Wellenleiter (11) zwischen 1 und 100 und vorzugsweise zwischen 2 und 20 enthalten ist.

7. Laservorrichtung entsprechend den Ansprüchen von 1 bis 4, dadurch gekennzeichnet, daß die numerische Öffnung des äußeren Wellenleiters (11) zwischen 0,12 und 0,35 und die numerische Öffnung des inneren Wellenleiters (10) zwischen 0,08 und 0,25 enthalten ist.

8. Laservorrichtung entsprechen irgendeiner der vorstehenden Ansprüche, dadurch gekennzeichnet, daß der innere Wellenleiter (10) aus mit Al, P Sc, Y oder einer Kombination hieraus gedoptem Quarzglas besteht.

9. Laservorrichtung entsprechend irgendeinem der vorstehenden Ansprüche, dadurch gekennzeichnet, daß die Plattierung (12) aus Quarzglas besteht.

10. Laservorrichtung entsprechend Anspruch 9, dadurch gekennzeichnet, daß das genannte Quarzglas mit Fluor gedopt ist.

11. Laservorrichtung entsprechend irgendeinem der vorstehenden Ansprüche, dadurch gekennzeichnet, daß die genannten Spiegel (3, 4) wie eine Beschichtung aus mehrschichtigem dielektrischen Material gebildet sind.

12. Laservorrichtung entsprechend irgendeinem der vorstehenden Ansprüche, dadurch gekennzeichnet, daß der genannte äußere Wellenleiter (11) ein graduiertes Profil des Brechungsindexes hat.

13. Laservorrichtung entsprechend irgendeinem der vorstehenden Ansprüche, dadurch gekennzeichnet, daß es sich bei der genannten Diodenquelle (1) um eine 800 nm GaAlAs Mehrmoden-Laserdiode handelt.

14. Laservorrichtung entsprechend Anspruch 1, dadurch gekennzeichnet, daß das Reflektionsvermögen der genannten Spiegel (3, 4) > 90% beträgt.

15. Laservorrichtung entsprechend den Ansprüchen 1 und 14, dadurch gekennzeichnet, daß das Reflektionsvermögen des der Pumpdiode (1) gegenüber liegenden Spiegels (3) > 99% beträgt.

## Revendications

1. Dispositif de laser monomode à fibres optiques, qui comprend:
- une source de pompage (1) à diode de laser (1), qui émet de la lumière avec une première longueur d'onde;
- un segment de fibre optique (2) couplé à une extrémité à la dite source à diode de laser (1), qui comprend:
i. une guide d'ondes intérieure (10) monomode avec index à gradins;
ii. une guide d'ondes multimode extérieure (11), qui entoure la précédente;
iii. une couverture (12), qui entoure la dite guide d'ondes extérieure (11),
- une pair de miroirs (3, 4) placés aux extrémités du dit segment de fibre optique (2),
caractérisé en ce que:
- la dite guide d'ondes intérieure (10) est dopée de Nd et d'une concentration d'Yb assez basse pour assurer le transfert radiatif d'intercavité de Nd à Yb;
- les dits miroirs (3, 4) reflètent des radiations laser ND avec une deuxième longueur d'ondes comprise dans la gamme de 910-940 nm et des radiations laser Yb avec une troisième longueur d'ondes comprise dans la gamme de 970-980, et ils suppriment des réflections de longueurs d'ondes en dehors de la gamme définie par la dite deuxième et troisième longueur d'ondes,
- la dite première longueur d'ondes étant comprise dans la gamme de 780-820 nm.

2. Un dispositif de laser selon la revendication 1, caractérisé en ce que la concentration de Nd dans la dite guide d'ondes intérieure (10) est comprise entre 10 et 500 ppm et la concentration de Yb est comprise entre 1 et 50 ppm.

3. Un dispositif de laser selon la revendication 1 ou 2, caractérisé en ce que le concentrations de Nd et Yb dans la dite guide d'ondes intérieure (10) sont respectivement de 80-110 ppm et de 1-4 ppm.

4. Un dispositif de laser selon les revendications de 1 à 3, caractérisé en ce que le dît segment de guide d'ondes optiques (2) est couplé à la dite source à diode de laser (1) par une épissure directe d'un tronçon de fibre multimode (20) (pigtail) au dît segment de guide d'ondes optiques.

5. Un dispositif de laser selon les revendications de 1 à 4, caractérisé en ce que le rapport entre la concentration de Nd et Yb dans la dite guide d'ondes monomode à index graduel (10) est compris entre 20 et 100, et de préférence entre 30 et 50.

6. Un dispositif de laser selon les revendications de 1 à 4, caractérisé en ce que le rapport des zones à section transversale entre la guide d'ondes intérieure (10) et la guide d'ondes extérieure (11) est compris entre 1 et 100, et de préférence entre 2 et 20.

7. Un dispositif de laser selon les revendications de 1 à 4, caractérisé en ce que l'ouverture numérique de la guide d'ondes extérieure (11) est comprise entre 0,12 et 0,35 et l'ouverture numérique de la guide d'ondes intérieure (10) est comprise entre 0,08 et 0,25.

8. Un dispositif de laser selon n'importe laquelle des revendication précédentes, caractérisé en ce que la guide d'ondes intérieure (10) consiste en verre de quartz dopé de Al, P, Sc, Y ou d'une combinaison de ceux-ci.

9. Un dispositif de laser selon n'importe laquelle des revendications précédentes, caractérisé en ce que la dite couverture (12) consiste en verre de quartz.

10. Un dispositif de laser selon la revendication 9, caractérisé en ce que le dît verre de quartz est dopé de fluor.

11. Un dispositif de laser selon n'importe laquelle des revendications précédentes, caractérisé en ce que les dits miroirs (3, 4) sont formés comme des revêtements diélectriques à plusieurs couches.

12. Un dispositif de laser selon n'importe laquelle des revendications précédentes, caractérisé en ce que la dite guide d'ondes extérieure (11) a un profil graduel de l'index de réfraction.

13. Un dispositif de laser selon n'importe laquelle des revendications précédentes, caractérisé en ce que la dite source à diode (1) est une diode laser multimode GaAlAs à 800 nm.

14. Un dispositif de laser selon la revendication 1, caractérisé en ce que le pouvoir réflecteur des dits miroirs (3, 4) est > 90%.

15. Un dispositif de laser selon les revendications 1 et 14, caractérisé en ce que le pouvoir réflecteur du miroir (3) opposé la diode de pompage (1) est > 99%.
